# EUROPEAN PATENT SPECIFICATION

(11) **EP 2 792 700 B1**
(45) Date of publication and mention of the grant of the patent: **23.11.2016**
(21) Application number: 14164743.8
(22) Date of filing: 15.04.2014
(51) Int. Cl.: C08J 3/24, C08L 33/02

(54) **HYDROPHOBIC POLYMERS**
HYDROPHOBES POLYMER
POLYMÈRES HYDROPHOBES

(30) Priority: 15.04.2013 NL 2010639
(43) Date of publication of application: 22.10.2014
(73) Proprietor: Nutripol Capital S.a.r.l., 2347 Luxembourg (LU)
(72) Inventor: Kaya, Mustafa, L-2347 LUXEMBOURG (LU)
(74) Representative: van Kooij, Adriaan

(56) References cited:
- WO-A1-2011/098122
- US-A1- 2006 034 905

## Description

### Description

The present invention relates to hydrophobic, or water resistant or water repellant, polymers and especially to hydrophobic, or water resistant or water repellant, biodegradable polymers. Preferred polymers according to the present invention are polymers based on polylactic acid, polyvinyl, starch, polyacrylic acid, polyester and polymers based on combinations thereof. Further, the present invention relates to novel additives and techniques to provide polymers, and especially biodegradable polymers, with improved hydrophobic, water-repellent or water resistant properties.

Compostable polymers such as biopolymers and biodegradable polymers have an inherent tendency to swell or to absorb, in some cases, significant amounts of water. However, water absorption is for many applications a non-desirable characteristic and, accordingly, water absorption limits the number of applications for which biodegradable polymers can suitably be used.

For example, because of an inherent hydrophilic character of biodegradable polymers, i.e. water absorption is an import factor determining biodegradability, these polymers have a tendency to migrate into food or into a surface when they become in contact with water or moisture. Further, water absorption characteristics can negatively influence the durability, or life-time, of products made from biodegradable polymers.

Although a number of additives decreasing the water absorption are known, either the added value of these additives is limited or these additives have a negative contribution to the overall biodegradability of the resulting polymer.

Accordingly, there is a general need in the art of polymers to provide further additives capable of decreasing the water absorption of polymers. Formulated, differently, there is a general need in the art of polymers to increase the hydrophobicity, or water-repelling characteristics, of polymers, and especially biodegradable polymers.

WO2011 098122 discloses biodegradable polymers based on polyacrylic acid and/ or polyaspartic polymers crosslinked with oligosaccharides at pH <5. Considering the above, it is an object of the present invention, amongst other objects, to provide means for increasing the hydrophobicity of polymers and especially biodegradable polymers.

It is a further object of the present invention, amongst other objects, to provide polymers, and especially biodegradable polymers, with an increased hydrophobicity allowing to use the present polymers for a wide range of applications.

At least part of the above objects, if not all, are met by the present invention by providing an hydrophobic polymer as defined in the appended claims.

Specifically, at least part of the above objects, if not all, are met by the present invention by providing hydrophobic polymers obtainable by a method comprising:
a) preparing a mixture of monomers and/or polymers thereby forming a polymeric mixture; and
b) crosslinking said polymeric mixture in the presence of one or more lower oligosaccharides, preferably di- or trisaccharides, at a pH between 1.5 and 6 and a temperature of 60°C to 160°C thereby providing a crosslinked polymeric mixture;
   wherein:
   1) in step (a) a compound selected from the group consisting of polyisobutylene (PIB), hydroxymethylfural (HMF) and 2,5-dimethylfuran (DMF) is added to the polymeric mixture; or
   2) after step (b) a compound selected from the group consisting of polyisobutylene (PIB), hydroxymethylfural (HMF) and 2,5-dimethylfuran (DMF) is contacted with the crosslinked polymeric mixture.

The present inventor has surprisingly found that incorporating, as additives, polyisobutylene with the formula (C₄H₈)n and/or HMF (hydroxymethylfural with the formula C₆H₆O₃) and/or DMF (2,5-Dimethylfuran with the formula (CH₃)₂C₄H₂O), into polymers, for example by adding or coating, significantly increases the hydrophobicity, or decreases the hydrophylicity, of these polymers.

The present additives can be, for example, be added or coated dissolved in an appropriate solvent, they can directly be added or mixed into polymeric compounds, they can be added by side feeding into, for example, an extruder or they can be (spray)coated onto a polymer.

Appropriate solvents for the present additives include oils such as rapeseed oil, olive oil, caraway oil, soy oil, walnut oil, hazelnut oil, peanut oil or peanut butter, coconut butter, lemon oil, sheep fat, beef fat, and fish oil and hydrocarbon solvents, such as a blend of hydrocarbon solvent sold under the trademark shellsol D100^{®}, naphthenes, paraffin, aromatic hydrocarbons, halogenated hydrocarbons, and aliphatic, aromatic or cyclic hydrocarbons. Preferred solvents are C₅-C₁₀ saturated hydrocarbons because they readily dissolve polyisobutylene (PIB) at temperatures between 80 to 160°C.

According to the present invention polyisobutylene (PIB) preferably has a molecular weight between 50,000 to 100,000 or higher. The polyisobutylene (PIB) according to the present invention can be hydrogenated for improving the solubility thereof.

Hydrogenation can, for example, be provided by first oxidizing polyisobutylene (PIB) using, for example, nitric acid, hydrogen peroxide or another oxidizing agent and subsequently hydrogenating polyisobutylene (PIB) using a hydrogen-bond donor such as sulphonic acid, carboxylic acid, alcohol, phosphorous acid, phosphoric acid esters, sulfuric acids or phenols.

According to the present invention, the pH of the crosslinking reaction is in the range of 1.5 to 6. This pH range can suitably be provided by adding an acid to the polymeric mixture such as sulfuric acid.

Within the context of the present invention, the addition of further additives improving the hydrophobicity to the polymeric composition is contemplated such as the addition of gallic acid, methylgallate, fluoropolymers, aluminum stearate and/or calcium stearate.

The present inventor also surprisingly found that the present additives, i.e. polyisobutylene (PIB), hydroxymethylfural (HMF) and 2,5-dimethylfuran (DMF), besides improving the hydrophobicity, also contribute to the fire retardation characteristics of the resulting crosslinked polymeric mixture.

According to a preferred embodiment of this first aspect of the present invention, the present hydrophobic polymers are obtainable by a method wherein:
1) in step (a) a hydrocarbon solvent or a vegetable or mineral oil is further added to the polymeric mixture; or
2) after step (b) said compound selected from the group consisting of polyisobutylene (PIB), hydroxymethylfural (HMF) and 2,5-dimethylfuran (DMF) is further dissolved in a hydrocarbon solvent or a vegetable or mineral oil.

According to another preferred embodiment of this first aspect of the present invention, the present hydrophobic polymers are obtainable by a method wherein in step (a) one or more oxygen donors are added to the polymeric mixture, said oxygen donors are preferably selected from the group consisting of hydrogen peroxide, ozone and nitric oxide.

According to yet another preferred embodiment of this first aspect of the present invention, the present hydrophobic polymers are obtainable by a method wherein in step (a) one or more hydrogen-bond donors are added to the polymeric mixture, said hydrogen-bond donors are preferably selected from the group consisting of sulphonic acid, carboxylic acid, alcohol, phosphorous acid, phosphoric acid ester, sulfuric acid and phenol.

According to still another preferred embodiment of this first aspect of the present invention, the present hydrophobic polymers are obtainable by a method wherein in step (a) are further added to the polymeric mixture sodium ions, preferably sodium silicate and/or sodium oxide.

According to an especially preferred embodiment of the present invention, the present polymeric mixture comprises polymers selected from the group consisting of polyacrylic acid (PAA), polylactic acid (PLA), polyvinyl based polymers, polyvinyl alcohol (PVOH) and starch, preferably a polymeric mixture comprising polyacrylic acid (PAA) and polyvinyl alcohol (PVOH).

According to another especially preferred embodiment of the present invention, the present hydrophobic polymers are obtainable by a method wherein step (a) comprises:
a1) preparing an acidic mixture of polyacrylic and/or polyaspartic acid, sodium ions, one or more oligosaccharides and water, wherein the resulting mixture has a pH equal to or lower than 5;
a2) maintaining the temperature of said acidic mixture in a range of from 80°C to 130°C until an homogeneous suspension is obtained; and
a3) adding polyvinyl alcohol (PVOH) and one or more polycarboxylic acids to the mixture of step (b) while maintaining the temperature in a range of from 80°C to 130°C thereby forming a crosslinked polymeric mixture.

In the present polymeric mixture the amounts of polyisobutylene (PIB), hydroxymethylfural (HMF) or 2,5-dimethylfuran (DMF) are preferably in the range of 0.5 to 60 weight percent (wt%) as compared to the weight of the polymeric mixture

According to the present invention the pH of the polymeric mixture of step (a) preferably is in the range of 1 to 4.5, more preferably 3.5 to 4.

According to the present invention, the present oligosaccharides are preferably selected from the group consisting of sucrose, maltose, lactose, nigerotriose, maltrotriose, melezitose, sugar alcohols, mannitol, sorbitol, xylitol, maltitol and lactitol, preferably sucrose.

According to the present invention, the present hydrophobic polymers are preferably obtainable using a di- or tricarboxylic acid chosen from the group consisting of citric acid, isocitric acid, aconitic acid, tricarballylic acid, succinic acid, maleic acid, citrofol a1 and citrofol b1, preferably citric acid and/or citrofol b1.

According to a second aspect, the present invention relates to the use of a compound selected from the group consisting of polyisobutylene (PIB), hydroxymethylfural (HMF) and 2,5-dimethylfuran (DMF) for increasing the hydrophobicity of a polymer.

According to a third aspect, the present invention relates to the use of the present hydrophobic polymers for coating surfaces, as a protective layer, for thermal insulation, for anti-oxidation insulation, for the manufacture of packaging materials, the manufacture of food containers, the manufacture of food protective films, or for carpeting floor or walls.

The present invention will be further illustrated and detailed using examples of preferred embodiments. In the examples, reference is made to figures wherein:
- **Figure 1:**: shows a graphic representation of the water absorption characteristic of the present polymers (LT4 to LT20) as compared to polymers without the present additives (LT1 to LT3) after 24 hours;
- **Figure 2:**: shows a graphic representation of the water absorption characteristic of the present polymers (LT4 to LT16) as compared to polymers without the present additives (LT1 to LT3) after 48 hours;

### Examples

### Example 1: General preparation of samples

A premix A was prepared of:
- Shellsol D100 or an oil;
- Nitric acid or sulphuric acid;
- Hydrogen peroxide; and
- non-stabilized polyisobutylene.

The above premix A was mixed at temperatures between 60 to 160 °C until the polyisobutylene was dissolved.

A premix B was prepared of:
- Polyacrylic acid;
- Demineralized water;
- PVOH;
- Sucrose;
- NaOH;
- H₂SO₄ (optional); and
- Sodium silicate (optional)

The pH of the above premix B as adjusted to a pH smaller than 5 or less
Subsequently, premix A and premix B were combined at a temperature of between 80 and 160°C and mixed at maximum speed with a IKA Eurostar, power control-visc P1 until a crosslinked polymeric mixture was obtained.
When a hydrogenated polyisobutylene is used instead of non-stabilized polyisobutylene, nitric acid and hydrogen peroxide can be omitted from premix A.
The crosslinked polymeric mixture can be casted, extruded or sprayed. The drying of the crosslinked polymeric mixture can be by infrared or by temperature.

### Examples 2 to 11

Comparative examples LT1 to LT3 and examples LT4 to LT20 were prepared as follows using the protocol of example 1:

**Table 1: Polymer compositions**

| | **LT1** | **LT2** | **LT3** | **LT4** | **LT9** | **LT11** | **LT13** | **LT15** | **LT16** | **LT18** | **LT20** |
|---|---|---|---|---|---|---|---|---|---|---|---|
| Polyacrylic acid | 100 | 100 | 100 | 100 | 100 | 100 | 100 | 100 | 100 | 100 | 100 |
| Water | 100 | 300 | 200 | 200 | 200 | 200 | 200 | 200 | 200 | 200 | 200 |
| Sucrose | 15 | 15 | 15 | 15 | 15 | 15 | 15 | 15 | 15 | 15 | 15 |
| Polyvinyl-alcohol | 25 | 45 | 30 | 30 | 30 | 30 | 30 | 30 | 30 | 30 | 30 |
| H₂SO₄ | | 5 | 6 | 7 | | | 7 | 7 | | 10 | 10 |
| Sodium silicate | | | 0.95 | 1 | 02 | 0.2 | 0.5 | 0.5 | 0.5 | | |
| Polyiso-butylene | | | | 3 | 1 | 3 | 15 | 15 | 20 | 3* | 3 |
| Solvent* | | | | 3 | 30 | 15 | 20 | 20 | 20 | | |
| Oil | | | | | | | | | | 3 | 6 |

| | | | | | | | | | | | |
|---|---|---|---|---|---|---|---|---|---|---|---|
| *Hydrocarbon solvent (shellsol D100) | | | | | | | | | | | |

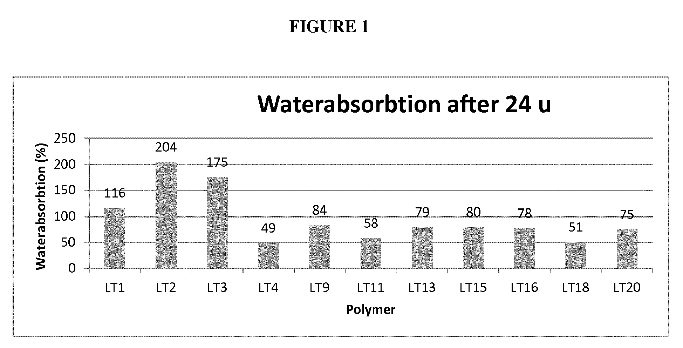

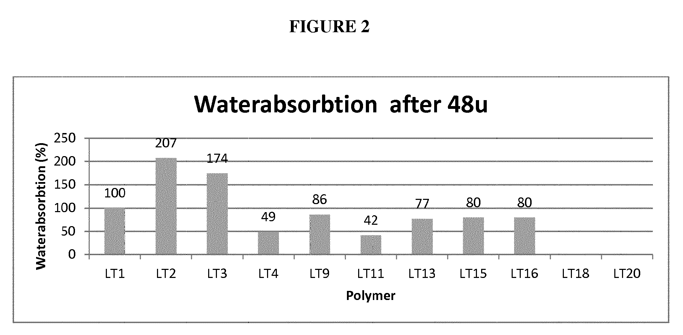

Subsequently the water absorption characteristics of the resulting crosslinked polymeric mixtures was determined after 24 hours and 48 hours. The results obtained are presented in **Table 2** and **Figure 1** (24 hours) and **Table 2** and **Figure 2** (48 hours)

**Table 2: Hydrophobiciy expressed in percentage water absorption**

| | **LT1** | **LT2** | **LT3** | **LT4** | **LT9** | **LT11** | **LT13** | **LT15** | **LT16** | **LT18** | **LT20** |
|---|---|---|---|---|---|---|---|---|---|---|---|
| Mass (g) | 1.44 | 0.68 | 1.62 | 0.8 | 122 | 1.25 | 2.2 | 1.52 | 0.98 | 1.04 | 2.03 |
| Mass (g) 24 hours | 3.11 | 2.07 | 4.46 | 1.19 | 224 | 1.98 | 3.94 | 2.73 | 1.74 | 1.57 | 3.56 |
| Waterabsorbtion (%) | 116 | 204 | 175 | 49 | 84 | 58 | 79 | 80 | 78 | 51 | 75 |
| Mass (g) 48 hours | 2.88 | 2.09 | 4.44 | 1.19 | 227 | 1.77 | 3.89 | 2.73 | 1.76 | | |

As shown in the Table 2 and Figures 1 and 2, adding the present additives enhanced the hydrophobicity of the crosslinked polymeric mixture in comparison to the comparative examples.

## Claims

1. Hydrophobic polymer obtainable by a method comprising:
a) preparing a mixture of monomers and/or polymers thereby forming a polymeric mixture; and
b) crosslinking said polymeric mixture in the presence of one or more lower oligosaccharides, preferably di- or trisaccharides, at a pH between 1.5 and 6 and a temperature of 60°C to 160°C thereby providing a crosslinked polymeric mixture;
wherein:
1) in step (a) a compound selected from the group consisting of polyisobutylene (PIB), hydroxymethylfural (HMF) and 2,5-dimethylfuran (DMF) is added to the polymeric mixture; or
2) after step (b) a compound selected from the group consisting of polyisobutylene (PIB), hydroxymethylfural (HMF) and 2,5-dimethylfuran (DMF) is contacted with the crosslinked polymeric mixture.

2. Hydrophobic polymer according to claim 1, wherein
1) in step (a) a hydrocarbon solvent or a vegetable or mineral oil is further added to the polymeric mixture; or
2) after step (b) said compound selected from the group consisting of polyisobutylene (PIB), hydroxymethylfural (HMF) and 2,5-dimethylfuran (DMF) is further dissolved in a hydrocarbon solvent or a vegetable or mineral oil.

3. Hydrophobic polymer according to claim 1 or claim 2, wherein in step (a) one or more oxygen donors are added to the polymeric mixture, said oxygen donors are preferably selected from the group consisting of hydrogen peroxide, ozone and nitric oxide.

4. Hydrophobic polymer according to any one of the claims 1 to 3, wherein in step (a) one or more hydrogen-bond donors are added to the polymeric mixture, said hydrogen-bond donors are preferably selected from the group consisting of sulphonic acid, carboxylic acid, alcohol, phosphorous acid, phosphoric acid ester, sulphuric acid and phenol.

5. Hydrophobic polymer according to any one of the claims 1 to 4, wherein in step (a) are further added to the polymeric mixture sodium ions, preferably sodium silicate and/or sodium oxide.

6. Hydrophobic polymer according to any one of the claims 1 to 5, wherein said polymer is selected from the group consisting of polyacrylic acid (PAA), polylactic acid (PLA), polyvinyl based polymers, polyvinyl alcohol (PVOH) and starch.

7. Hydrophobic polymer according to any one of the claims 1 to 6, wherein said polymeric mixture comprises polyacrylic acid (PAA) and polyvinyl alcohol (PVOH).

8. Hydrophobic polymer according to any one of the claims 1 to 7, wherein step (a) comprises:
a1) preparing an acidic mixture of polyacrylic and/or polyaspartic acid, sodium ions, one or more oligosaccharides and water, wherein the resulting mixture has a pH equal to or lower than 5;
a2) maintaining the temperature of said acidic mixture in a range of from 80°C to 130°C until an homogeneous suspension is obtained; and
a3) adding polyvinyl alcohol (PVOH) and one or more polycarboxylic acids to the mixture of step (b) while maintaining the temperature in a range of from 80°C to 130°C thereby forming a crosslinked polymeric mixture.

9. Hydrophobic polymer according to any one of the claim 1 to 8, wherein said compound selected from the group consisting of polyisobutylene (PIB), hydroxymethylfural (HMF) and 2,5-dimethylfuran (DMF) is added in an amount of 0.5 to 60 weight percent (wt%) of the polymeric mixture

10. Hydrophobic polymer according to any one of the claims 1 to 9, wherein the pH of the polymeric mixture of step (a) is in the range of 1 to 4.5, more preferably 3.5 to 4.

11. Hydrophobic polymer according to any one of the claims 1 to 10, wherein said one or more oligosaccharides are selected from the group consisting of sucrose, maltose, lactose, nigerotriose, maltrotriose, melezitose, sugar alcohols, mannitol, sorbitol, xylitol, maltitol and lactitol, preferably sucrose.

12. Hydrophobic polymer according to any one of claims 1 to 11, wherein the polycarboxylic acid is a di- or tricarboxylic acid chosen from the group consisting of citric acid, isocitric acid, aconitic acid, tricarballylic acid, succinic acid, maleic acid, citrofol a1 and citrofol b1, preferably citric acid and/or citrofol b 1.

13. Hydrophobic polymer according to any one of the claims 1 to 12, wherein the polymeric mixture of step (a) further comprises one or more vegetable and/or animal oils and/or fats selected from the group consisting of rapeseed oil, olive oil, caraway oil, soy oil, walnut oil, hazelnut oil, peanut oil or peanut butter, coconut butter, lemon oil, sheep fat, beef fat, and fish oil.

14. Use of a hydrophobic polymer according to any one of the claims 1 to 13 for coating surfaces, as a protective layer, for thermal insulation, for anti-oxidation insulation, for the manufacture of packaging materials, the manufacture of food containers, the manufacture of food protective films, or for carpeting floor or walls.

## Patentansprüche

1. Hydrophobes Polymer, das durch ein Verfahren erhältlich ist, welches umfasst:
a) Herstellen eines Gemisches aus Monomeren und/oder Polymeren, um dadurch ein Polymergemisch zu bilden, und
b) Vernetzen des Polymergemischs in Anwesenheit eines oder mehrerer niederer Oligosaccharide, vorzugsweise von Di- oder Trisacchariden bei einem pH-Wert zwischen 1,5 und 6 und einer Temperatur von 60°C bis 160°C, um dadurch ein vernetztes Polymergemisch bereitzustellen,
wobei
1) beim Schritt a) eine Verbindung, die aus der Gruppe ausgewählt ist, welche aus Polyisobutylen (PIB), Hydroxymethylfurfural (HMF) und 2,5-dimethylfuran (DMF) besteht, dem Polymergemisch hinzugesetzt wird oder
2) nach dem Schritt b) eine Verbindung, die aus der Gruppe ausgewählt ist, welche aus Polyisobutylen (PIB), Hydroxymethylfurfural (HMF) und 2,5-dimethylfuran (DMF) besteht, mit dem vernetzten Polymergemisch in Kontakt gebracht wird.

2. Hydrophobes Polymer nach Anspruch 1, wobei
1) beim Schritt a) dem Polymergemisch ferner ein Kohlenwasserstoff-Lösungsmittel oder ein Pflanzen- oder Mineralöl hinzugesetzt wird oder
2) nach dem Schritt b) die Verbindung, die aus der Gruppe ausgewählt ist, welche aus Polyisobutylen (PIB), Hydroxymethylfurfural (HMF) und 2,5-dimethylfuran (DMF) besteht, ferner in einem Kohlenwasserstoff-Lösungsmittel oder einem Pflanzen- oder Mineralöl gelöst wird.

3. Hydrophobes Polymer nach Anspruch 1 oder 2, wobei beim Schritt a) dem Polymergemisch ein oder mehrere Sauerstoff-geber hinzugesetzt wird/werden, der bzw. die vorzugsweise aus der Gruppe ausgewählt ist/sind, bestehend aus Wasserstoffperoxid, Ozon und Stickoxyd.

4. Hydrophobes Polymer nach einem der Ansprüche 1 bis 3, wobei beim Schritt a) dem Polymergemisch ein oder mehrere Wasserstoffbindungsgeber hinzugesetzt werden, die vorzugsweise aus der Gruppe ausgewählt sind, bestehend aus Sulfonsäure, Carbonsäure, Alkohol, phosphoriger Säure, Phosphorsäureester, Schwefelsäure und Phenol.

5. Hydrophobes Polymer nach einem der Ansprüche 1 bis 4, wobei beim Schritt a) dem Polymergemisch ferner Natriumionen hinzugesetzt werden, vorzugsweise Natriumsilikat und/oder Natriumoxid.

6. Hydrophobes Polymer nach einem der Ansprüche 1 bis 5, wobei das Polymer aus der Gruppe ausgewählt ist, bestehend aus Polyacrylsäure (PAA), Polymilchsäure (PLA), Polymeren auf Polyvinylbasis, Polyvinylalkohol (PVOH) und Stärke.

7. Hydrophobes Polymer nach einem der Ansprüche 1 bis 6, wobei das Polymergemisch Polyacrylsäure (PAA) und Polyvinylalkohol (PVOH) umfasst.

8. Hydrophobes Polymer nach einem der Ansprüche 1 bis 7, wobei der Schritt a) umfasst:
a1) Herstellen eines sauren Gemischs aus Polyacryl- und/oder Polyasparaginsäure, Natriumionen, einem oder mehreren Oligosacchariden und Wasser, wobei das resultierende Gemisch einen pH-Wert besitzt, der gleich oder niedriger ist als 5, a2) Aufrechterhalten der Temperatur des sauren Gemischs in einem Bereich von 80°C bis 130°C, bis eine homogene Suspension erhalten wird, und
a3) Zusetzen von Polyvinylalkohol (PVOH) und einer oder mehreren Polycarbonsäuren zu dem Gemisch von Schritt b) während der Aufrechterhaltung der Temperatur in einem Bereich von 80°C bis 130°C, wodurch ein vernetztes Polymergemisch gebildet wird.

9. Hydrophobes Polymer nach einem der Ansprüche 1 bis 8, wobei die Verbindung, die aus der aus Polyisobutylen (PIB), Hydroxymethylfurfural (HMF) und 2,5-dimethylfuran (DMF) bestehenden Gruppe ausgewählt ist, in einer Menge von 0,5 bis 60 Gewichtsprozent (Gew.-%) des Polymergemischs hinzugesetzt wird.

10. Hydrophobes Polymer nach einem der Ansprüche 1 bis 9, wobei der pH-Wert des Polymergemischs von Schritt a) im Bereich von 1 bis 4,5, bevorzugterweise von 3,5 bis 4 liegt.

11. Hydrophobes Polymer nach einem der Ansprüche 1 bis 10, wobei das eine oder die mehreren Oligosaccharid(e) aus der Gruppe ausgewählt ist/sind, bestehend aus Saccharose, Maltose, Laktose, Nigerotriose, Maltrotriose, Melezitose, Zuckeralkoholen, Mannitol, Sorbitol, Xylitol, Maltitol und Laktitol, vorzugsweise Saccharose.

12. Hydrophobes Polymer nach einem der Ansprüche 1 bis 11, wobei die Polycarbonsäure eine Di- oder Tri-Carbonsäure ist, die aus der Gruppe ausgewählt ist, bestehend aus Zitronensäure, Isozitronensäure, Aconitsäure, Tricarballylsäure, Bernsteinsäure, Maleinsäure, Citrofol a1, Citrofol b1, vorzugsweise Zitronensäure und/oder Citrofol b1.

13. Hydrophobes Polymer nach einem der Ansprüche 1 bis 12, wobei das Polymergemisch von Schritt a) ferner ein oder mehrere pflanzliche und/oder tierische Öle und/oder Fette umfasst, ausgewählt aus der Gruppe, bestehend aus Rapsöl, Olivenöl, Kümmelöl, Sojaöl, Walnussöl, Haselnussöl, Erdnussöl oder Erdnussbutter, Kokosnussbutter, Zitronenöl, Schaffett, Rinderfett und Fischtran.

14. Verwendung eines hydrophoben Polymers nach einem der Ansprüche 1 bis 13 zum Überziehen von Flächen, als Schutzschicht, zur thermischen Isolation, zur Antioxidations-Isolierung, zur Herstellung von Verpackungsmaterialien, zur Herstellung von Nahrungsmittelbehältern, zur Herstellung von Nahrungsmittel-Schutzfilmen oder zum Bekleidung von Boden oder Wänden.

## Revendications

1. Polymère hydrophobe pouvant être obtenu par un procédé comprenant :
a) la préparation d'un mélange de monomères et/ou polymères formant ainsi un mélange polymère ; et
b) la réticulation dudit mélange polymère en présence d'un ou plusieurs oligosaccharides inférieurs, de préférence des di- ou trisaccharides, à un pH compris entre 1,5 et 6 et à une température de 60°C à 160°C, fournissant ainsi un mélange polymère réticulé ;
dans lequel
1) dans l'étape (a), un composé sélectionné dans le groupe constitué de polyisobutylène (PIB), d'hydroxyméthylfural (HMF) et de 2,5-diméthylfurane (DMF) est ajouté au mélange polymère ; ou
2) après l'étape (b), un composé sélectionné dans le groupe constitué de polyisobutylène (PIB), d'hydroxyméthylfural (HMF) et de 2,5-diméthylfurane (DMF) est mis en contact avec le mélange polymère réticulé.

2. Polymère hydrophobe selon la revendication 1, dans lequel :
1) dans l'étape (a), un solvant hydrocarbure ou une huile végétale ou minérale est en outre ajouté(e) au mélange polymère ; ou
2) après l'étape (b), ledit composé sélectionné dans le groupe constitué de polyisobutylène (PIB), d'hydroxyméthylfural (HMF) et de 2,5-diméthylfurane (DMF) est en outre dissous dans un solvant hydrocarbure ou une huile végétale ou minérale.

3. Polymère hydrophobe selon la revendication 1 ou la revendication 2, dans lequel, dans l'étape (a), un ou plusieurs donneurs d'oxygène sont ajoutés au mélange polymère, lesdits donneurs d'oxygène étant de préférence sélectionnés dans le groupe constitué de peroxyde d'hydrogène, d'ozone et d'oxyde nitrique.

4. Polymère hydrophobe selon l'une quelconque des revendications 1 à 3, dans lequel, dans l'étape (a), un ou plusieurs donneurs à liaison hydrogène sont ajoutés au mélange polymère, lesdits donneurs à liaison hydrogène étant de préférence sélectionnés dans le groupe constitué d'acide sulfonique, d'acide carboxylique, d'alcool, d'acide phosphoreux, d'ester d'acide phosphorique, d'acide sulfurique et de phénol.

5. Polymère hydrophobe selon l'une quelconque des revendications 1 à 4, dans lequel, dans l'étape (a), des ions sodium, de préférence de silicate de sodium et/ou d'oxyde de sodium, sont en outre ajoutés au mélange polymère.

6. Polymère hydrophobe selon l'une quelconque des revendications 1 à 5, dans lequel ledit polymère est sélectionné dans le groupe constitué d'acide polyacrylique (PAA), d'acide polylactique (PLA), de polymères à base de polyvinyle, d'alcool de polyvinyle (PVOH) et d'amidon.

7. Polymère hydrophobe selon l'une quelconque des revendications 1 à 6, dans lequel ledit mélange polymère comprend de l'acide polyacrylique (PAA) et de l'alcool de polyvinyle (PVOH).

8. Polymère hydrophobe selon l'une quelconque des revendications 1 à 7, dans lequel l'étape (a) comprend :
a1) la préparation d'un mélange acide d'acide polyacrylique et/ou polyaspartique, d'ions sodium, d'un ou plusieurs oligosaccharides et d'eau, dans lequel le mélange obtenu a un pH égal ou inférieur à 5 ;
a2) le maintien de la température dudit mélange acide dans une plage de 80°C à 130°C jusqu'à obtention d'une suspension homogène ; et
a3) l'addition d'alcool de polyvinyle (PVOH) et d'un ou plusieurs acides polycarboxyliques au mélange de l'étape b), tout en maintenant la température dans une plage de 80°C à 130°C, en formant ainsi un mélange polymère réticulé.

9. Polymère hydrophobe selon l'une quelconque des revendications 1 à 8, dans lequel ledit composé sélectionné dans le groupe constitué de polyisobutylène (PIB), d'hydroxyméthylfural (HMF) et de 2,5-diméthylfurane (DMF) est ajouté, dans une quantité de 0,5 à 60 pour cent en poids (% en poids) du mélange polymère.

10. Polymère hydrophobe selon l'une quelconque des revendications 1 à 9, dans lequel le pH du mélange polymère de l'étape (a) est dans la plage de 1 à 4,5, de préférence de 3,5 à 4.

11. Polymère hydrophobe selon l'une quelconque des revendications 1 à 10, dans lequel ledit un ou plusieurs oligosaccharides sont sélectionnés dans le groupe constitué de saccharose, maltose, lactose, nigérotriose, maltotriose, mélézitose, alcools de sucre, mannitol, sorbitol, xylitol, maltitol et lactitol, de préférence le saccharose.

12. Polymère hydrophobe selon l'une quelconque des revendications 1 à 11, dans lequel l'acide polycarboxylique est un acide di- ou tricarboxylique choisi dans le groupe constitué d'acide citrique, d'acide isocitrique, d'acide aconitique, d'acide tricarballylique, d'acide succinique, d'acide maléique, de citrofol a1 et de citrofol b1, de préférence l'acide citrique et/ou le citrofol b1.

13. Polymère hydrophobe selon l'une quelconque des revendications 1 à 12, dans lequel le mélange polymère de l'étape (a) comprend en outre une ou plusieurs huiles et/ou graisses végétales et/ou animales sélectionnées dans le groupe constitué d'huile de colza, huile d'olive, huile de carvi, huile de soja, huile de noix, huile de noisette, huile d'arachide ou beurre de cacahuète, beurre de noix de coco, huile de citron, graisse ovine, graisse de boeuf, et huile de poisson.

14. Utilisation d'un polymère hydrophobe selon l'une quelconque des revendications 1 à 13, pour le traitement de surface, sous la forme d'une couche de protection, pour l'isolation thermique, pour l'isolation anti-oxydation, pour la fabrication de matériaux d'emballage, la fabrication de récipients alimentaires, la fabrication de films protecteurs alimentaires ou pour le tapissage de sol ou de murs.
